(19)

Europäisches
Patentamt
European
Patent Office
Office européen
des brevets

(11)     **EP 2 733 858 B1**

(12)         **EUROPEAN PATENT SPECIFICATION**

(45) Date of publication and mention
of the grant of the patent:
**26.08.2015  Bulletin 2015/35**

(51) Int Cl.:
*H04B 3/46* *(2015.01)*          *H04M 3/30* *(2006.01)*
*H04M 11/06* *(2006.01)*         *H04B 3/487* *(2015.01)*
*H04B 3/32* *(2006.01)*          *H04M 3/34* *(2006.01)*

(21) Application number: **12306438.8**

(22) Date of filing: **19.11.2012**

(54) **Method and device for determining a length value of a section of a telecommunication line**

Verfahren und Vorrichtung zur Bestimmung des Längenwerts eines Abschnitts einer
Telekommunikationsleitung

Procédé et dispositif pour déterminer une valeur de longueur d'une section d'une ligne de
télécommunication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.05.2014  Bulletin 2014/21**

(73) Proprietor: **ALCATEL LUCENT
92100 Boulogne-Billancourt (FR)**

(72) Inventors:
• **Drooghaag, Benoît
1421 Ophain-Bois-Seigneur-Isaac (BE)**

• **Vos, Eric
2490 Balen (BE)**

(74) Representative: **ALU Antw Patent Attorneys
Copernicuslaan 50
2018 Antwerpen (BE)**

(56) References cited:
**EP-A1- 2 348 644          WO-A1-2010/022174
US-A1- 2008 151 742**

Printed by Jouve, 75001 PARIS (FR)

## Description

### Field of the invention

The present invention refers to a method for determining a length value characterizing a length of a first section of a first telecommunication line, a second section of the first telecommunication line being arranged along at least one second telecommunication line so that the first telecommunication line causes crosstalk to the second telecommunication line. The invention further refers to a corresponding device and computer program product.

### Background

In today's digital subscriber line (DSL) deployments, different variants of DSL techniques are used. For example, DSL techniques providing a rather low bit rate such as ADSLx; e. g. ADSL, ADSL2, ADSL2+ or READSL; and other DSL techniques that provide a comparatively high bit rate such as Very High Speed Digital Subscriber Line (VDSL); e.g. VDSL1 or VDSL2; are often used on different telecommunication lines that are grouped into a single binder arranged between a building and a cabinet of the network operator. Telecommunication lines configured for rather low bit rate communication typically end at DSL modem circuitry installed at a central office or a local exchange of the network operator. For these low bit rate telecommunication lines, the cabinet mainly serves as a cross-connect for electrically connecting the wires between the central office or local exchange and the cabinet to wires between the cabinet and the individual buildings.

Because high bit rate DSL techniques require the telecommunication line between the network operator's modem circuitry and a modem circuitry of the customer's premises equipment (CPE) not to exceed a maximum length of typically about a few hundred meters, the operator's modem circuitry of these high bit rate telecommunication lines is often installed in the cabinet. In other words, the cabinet may include an access node for the high bit rate communication lines. The access node may be connected via a high bit rate backhaul link, such as an optical link, to a communication network of the operator (fiber to the cabinet, FTTC). A cabinet having such an access node is also referred to as remote unit, remote terminal or flexibility point.

In order to avoid excessive crosstalk from the high bit rate lines to the low bit rate lines in a section of the low bit rate line in which the low bit-rate and the high bit rate line run in parallel (e. g. in the binder between the cabinet and the building), a Downstream Power Back-Off (DPBO) mechanism is applied on the high bit-rate telecommunication lines. DPBO allows shaping the Power Spectral Density (PSD) of a downstream signal from the modem circuitry in the cabinet to the modem circuitry of the CPE. In order to protect the low bit rate lines coming from the central office or local exchange and coexisting in the same binder, DPBO basically adjusts the downstream transmit PSD for VDSL2 lines, such that the far-end crosstalk (FEXT) generated by these lines is equal to the FEXT generated by the rather low bit rate lines. Therefore, the impact from VDSL2 on ADSLx becomes equal to the impact from ADSLx itself.

In order to protect the low bit rate lines from the crosstalk caused by the high bit rate lines effectively, configuration parameters for DPBO must be set correctly. In case of incorrectly set configuration parameters, the crosstalk coming from the high bit rate lines will be abnormally high and seriously impact the performance of the low bit rate lines.

The published patent application US 2008/0151742 A1 discloses a device for determining information indicating a length of a part of a cable connecting a transceiver unit and a subscriber device.

In EP 2 348 644 A1, a method and device for Upstream Power Back-Off (UPBO) in a DSL is disclosed.

In WO 2010/022174 A1, a method and system for robust digital subscriber loop communication is disclosed.

### Summary

At least one correct DPBO parameter depends on a length of an exchange side section of a telecommunication line, i.e. the length of said first section of the telecommunication line between the central office and a remote site where the cabinet is located. The object of the invention is to provide a method and device that can determine a value that describes the length of the exchange side section automatically.

The invention is defined by a method according to claim 1 and a device according to claim 11. Furthermore, a monitoring node according to claim 13 and a computer program product according to claim 14 are provided.

According to an embodiment, a method for determining a length value characterizing a length of a first section of a first telecommunication line, a second section of the first telecommunication line being arranged along at least one second telecommunication line so that the first telecommunication line causes crosstalk to the second telecommunication line is provided, wherein the method comprises acquiring line noise measurement data characterizing quiet line noise of the second telecommunication line; and determining the length value depending on the line noise measurement data. Since the line noise measurement data can rather easily be acquired automatically without the need of manual intervention e.g. at an access node, the method may be executed in an automated system. For example the method may be executed on a monitoring station as part of a network analyzer or a Dynamic Line Management (DLM) tool.

In an embodiment, the method comprises determining, preferably depending on the length value, a value of a configuration parameter for downstream power back-off (DPBO) to be applied on a signal transmitted over the second telecommunication line. As a consequence, the method allows determining automatically the length dependent DPBO configuration parameters without relying on manual measurements or network topology databases. Thus, DPBO of a network comprising many access nodes and a large number of telecommunication lines can be configured efficiently. By avoiding the use of topology databases miss configuration due to bad data quality of topology data stored in the topology database can be avoided.

In an embodiment, the method comprises determining the length value depending on a common sub-band of the line noise, at least a part of the common sub-band residing' within a first frequency range of a first data signal transmitted over the first telecommunication line and a second frequency range of a second data signal transmitted over the second telecommunication line or over at least one third telecommunication line. The third telecommunication line may be arranged along the second telecommunication line so that the third telecommunication line causes crosstalk to the second telecommunication line.

In an embodiment, the method comprises estimating parameters related to crosstalk to the second line, preferably a coupling length and/or a number of disturbers, said estimating depending on a further sub-band of the line noise, the further sub-band residing outside of the first frequency range and within the second frequency range.

Preferably, the method may further comprise determining the length value depending on the estimated parameters related to the crosstalk. By using the estimated parameters related to the crosstalk, the accuracy of the method can be improved.

In an embodiment, determining the length value and/or estimating the parameters related to the crosstalk comprises fitting a model, preferably a mathematical model, of the crosstalk to the line noise measurement data. Basically, this embodiment is based on a comparison of the measured line noise data with the model. The length value and/or the parameters related to the crosstalk are parameters of the respective model. In this embodiment, the length value and/or the parameters related to the crosstalk may be determined by selecting the model parameters such that the model reflects the measured line noise data. To this end, any suitable curve fitting approach may be applied.

In an embodiment, the second telecommunication line is subject to crosstalk caused by at least one third telecommunication line arranged along the second telecommunication line, wherein the method comprises selecting a transmit power signal density of at least one third data signal transmitted over the third telecommunication line such that the crosstalk caused by the first telecommunication line dominates the crosstalk caused by the third telecommunication line. The third telecommunication line may e.g. run in parallel to the second telecommunication line. For example, the second telecommunication line and the third telecommunication line may be arranged in the same binder.

In an embodiment, the power spectral density of the signal in the third line is selected by applying conservative DPBO settings for the third line that cause little crosstalk. For example, selecting the transmit power signal density of the third signal may comprise selecting a downstream power back-off parameter, preferably a parameter DPBOESEL describing an electrical length of the third line, such that it characterizes a length greater than a maximum possible length of the first section.

In an embodiment, selecting the transmit power density comprises applying a frequency independent offset to a power signal density mask, preferably to the power signal density mask obtained when performing downstream power back-off. Applying the frequency independent offset reduces the crosstalk caused by the third line further so that the method operates particularly reliably even for a large number of third lines.

In an embodiment, the telecommunication lines are digital subscriber lines, wherein the first telecommunication line extends from a central office over a remote site to customer premises equipment, the first section corresponding to an exchange side of the first line between the central office and the remote site, wherein the second telecommunication line and the third telecommunication line extend from the remote site to further customer premises equipment. This embodiment constitutes a mixed CO/RT deployment. Typically, different types of DSL systems are applied in such a mixed CO/RT deployment. In an exemplary embodiment, the first line may be an ADSLx line and the second and third lines may be VDSL2 lines. ADSLx can be used on rather long telecommunication line, whereas VDSL2 offers quite high bit rates but needs comparatively short telecommunications lines that must therefore be terminated at the remote site, e.g. in a cabinet.

In a preferred embodiment, a line specific length value is determined for each second telecommunication line of a plurality of different second telecommunication lines, wherein the length value is calculated depending on the line specific length values, preferably by determining a mean value of the line specific length values. Determining the line length value by considering multiple different second telecommunication lines improves both accuracy and reliability of the method.

According to another embodiment, a device for determining a length value characterizing a length of a first section of a first telecommunication line, a second section of the first telecommunication line being arranged along at least one second telecommunication line so that the first telecommunication line causes crosstalk to the second telecommunication line is provided, wherein the device is operable for acquiring line noise measurement data characterizing quiet line noise of the second telecommunication line; and determining the length value depending on the line noise measurement data.

In an embodiment the device is operable, preferably programmed, for executing a method according to the invention, embodiments of which method are described herein. In an embodiment, the device is a programmable computer or controller that is programmed for executing the method.

According to yet another embodiment, a monitoring node connectable, e.g. via a network interface, to an access network is provided, said network comprising at least one access node, wherein the monitoring node comprises a device for determining a length value according to the invention, embodiments of which device are described herein.

According to still another embodiment, a computer program product, preferably a computer readable storage medium, is provided the computer program product comprising a computer program that is programmed to execute a method according to the invention when run on a computer. The storage medium may include optical discs magnetic discs or tapes as well as semiconductor storage elements like RAM, ROM or Flash memory. Furthermore, the computer program may be provided by a server for download over a communication network such as the Internet.

**Brief description of the figures**

Exemplary embodiments and further advantages of the present invention are shown in the Figures and described in detail hereinafter.

Figure 1     shows a telecommunication network comprising multiple digital subscriber lines;
Figure 2     shows a detail of the network shown in Figure 1;
Figure 3     shows a flowchart of a method for determining a length of an exchange side section of a telecommunication line of the network shown in Figures 1 and 2;
Figure 4     shows a diagram of quiet line noise as a function of frequency in case that no downstream power back-off (DPBO) is performed; and
Figure 5     shows the diagram similar to Figure 4 of the quiet line noise if DPBO is performed.

**Description of the embodiments**

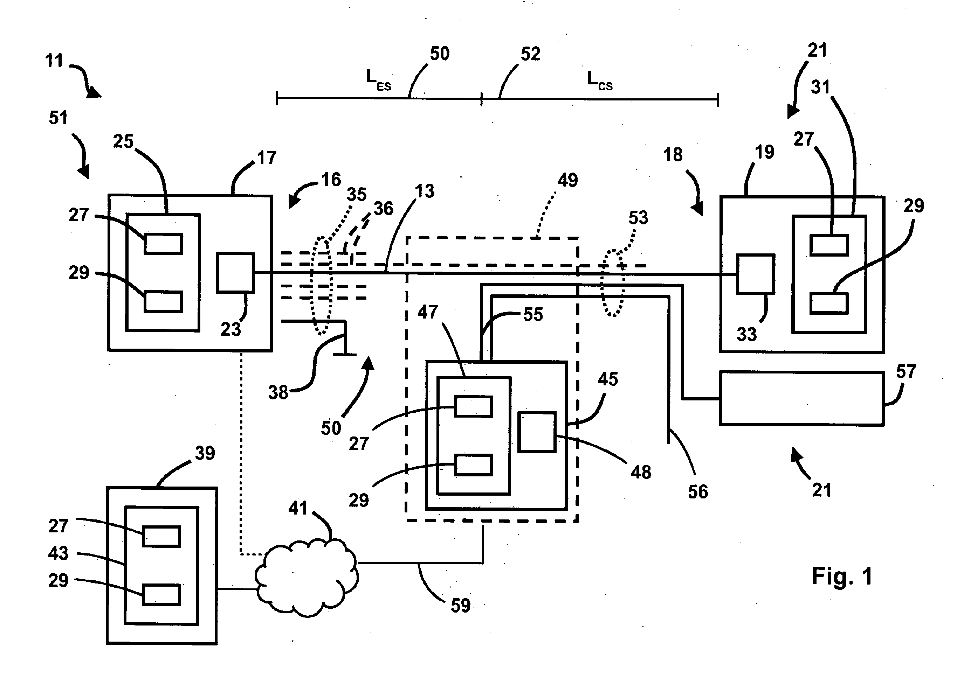

Figure 1 shows a communication network 11 comprising a first telecommunication line 13. A first end 16 of the telecommunication line 13 is connected to a network side termination node of the network 11, further referred to as first access node 17, and a second end 18 of the line 13 is connected to a terminal side termination node 19 of the network 11. The terminal side termination node 19 may be part of customer premises equipment (CPE 21) of the network 11.

The first telecommunication line 13 may be a Digital Subscriber Line (DSL) of any type. Consequently, the access node 17 may be a DSL Access Multiplexer (DSLAM) or another type of DSL access node. In the shown embodiment, the first telecommunication line 13 is an ADSLx line, i.e. a line that is used for DSL variants that have a rather low bit rate compared to other DSL variants like VDSL (e.g. VDSL1 or VDSL2). The terminal side termination node 19 may be a DSL modem or include a DSL modem.

The access node 17 has first modem circuitry 23 to which the first end 16 of the first line 13 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the first line 13 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least a section of the first line 13 is part of a first binder 35 and extends in parallel to at least one further telecommunication line 36. The further line 36 may be e.g. a DSL line of any type. In the shown embodiment, the at least one further line 36 is another ADSLx line. The binder 35 may comprise an electrically conductive, preferably metallic, shielding 38 that may be grounded as depicted in Figure 1.

Furthermore, the network 11 may comprise an optional monitoring station 39 connected e. g. via a interconnection network 41 to at least one of the nodes 17, 19 such that the station 39 can communicate with at least one of the nodes 17, 19, preferably the access node 17. The station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server, a personal computer, a handheld computer such as a PDA or cell phone, etc. In an embodiment, the collection and processing of the measurement data may not be done in the cell phone or laptop, but by a platform server. In this embodiment, the phones are clients that can retrieve the results of the collection and processing from the server.

As can be seen in Figure 1, the monitoring station 39 is connected via the interconnection network 41 to a second access node 45 of the network 11. The second access node 45 includes a fourth controller 47. The fourth controller 47 has at least essentially the same configuration as the first controller 25 or the second controller 31. In particular the fourth controller 47 may include a processor 27 and a storage element 29.

The second access node 45 may be located at a remote site of the network, in particular in a cabinet 49. The remote site and the cabinet 49 are located at a different place than a central office 51, where the first access node 17 is located. That is, the remote site including the cabinet 49 are remote with respect to the central office 51. The central office 51 is also referred to as local exchange.

In the shown embodiment, the first line 13 begins at the first access node 17 of the central office 51, goes through the cabinet 49 and ends at the modem 19 of the CPE 21. A first section 50 of the first line 13 between the access node 17 of the central office 51 and the cabinet 49 is usually called exchange side (ES) of the first line 13. A second section 52 of the line 13 between the cabinet 49 and the modem 19 of the CPE 21 is often referred to as customer site (CS) of the line 13. The first section 50 of the first line 13 may extend within the first binder 35 in parallel with least one further telecommunication line 36. The second section 52 of the first line 13 may extend within a second binder 53. Within the second binder 53, the first telecommunication line 13 and/or the at least one further line 36 may run in parallel to at least one second telecommunication line 55. The second telecommunication line 55 is arranged between the second access node 45 and a further DSL modem 57 of the CPE 21 of a further customer. For the sake of simplicity, only one further DSL modem 57 is shown in Figure 1, however multiple further DSL modems 57 may be provided that are connected over further second telecommunication lines with the second access node 45.

Because the access node 17 may be located in a central office 51, the first telecommunication line 13 begins at the central office 51, goes through the cabinet 49 and ends at the customer premises 21. In an embodiment, the cabinet 49 is a passive cross connect connecting a first section 50 of the line 13 arranged between the central office and the cabinet 51 to a second section 52 of the line 13 arranged between the cabinet 49 and the customer premises equipment 21. In particular, the first section 50 of the first telecommunication line 13 may extend within the first binder 35 and the second section 52 of the telecommunication line 13 may extend within a second binder 53, with the second binder 53 being installed between the cabinet 49 and e. g. a building where the CPE 21 is located.

A second telecommunication line 55 starts at the further access node 45, goes through the second binder 53 and ends at a further terminal side termination node 57, e. g. a further DSL modem 57, being part of the CPE 21 of another customer. That is, the second section 52 of the first telecommunication line 13 corresponds to a section of the line 13 where the two lines 13, 55 run at least essentially in parallel within the second binder 53. The further access node 45 may be connected to a high bit rate backhaul link, e.g. an optical link, the resulting access architecture therefore being called Fiber To The Cabinet (FTTC). In another embodiment, the cabinet 49 may be located at a different place. For example, the cabinet 49 may be located in a building where the CPE 21 is located (Fiber To The Building, FTTB). Because the remote site where the cabinet 49 is located is closer to the CPEs 21 than the central office 51, the second telecommunication line 55 is shorter than the first line 13 so that high bit rate services like VDSL can be provided over the second line 55.

As shown in Figure 1, multiple lines may be arranged between the second access node 45 and the CPE 21 of different customers. That is, at least one third telecommunication line 56 may be arranged between the second access node 45 and yet another DSL modem (not shown). At least one of the lines 55, 56 between the further access node 45 and one of the CPE 21 is used for DSL transmissions with a higher maximum bit rate than on the lines 13, 36 between the central office 51 and the respective CPE 21. In the shown embodiment, this at least one line with the higher bit rate is a VDSL2 line.

The lines 13, 36 connected to the access node 17 at the central office use DSL techniques that have a smaller maximum bit rate than the lines 55, 56 connected to the second access node 45. In the shown embodiments, the lines 13, 36 connected to the central office 51 use an ADSL-variant (ADSLx), such as ADSL, ADSL2, ADSL2+, READSL, etc.

The cabinet 49 may be located closer to the CPE 21 than the central office 51. As a consequence, the second telecommunication line 55 going through the second binder 53 only and not through the first binder 35, is shorter than the first telecommunication line 13 that goes through both binders 35, 53. In the shown embodiment, a Very High Speed Digital Subscriber Line (VDSL) technique such as VDSL 1 or VDSL 2 is used on the second telecommunication line 55. The first communication line 13 uses comparatively low bit rate DSL techniques such as ADSLx (e.g. ADSL2 or ADSL2+).

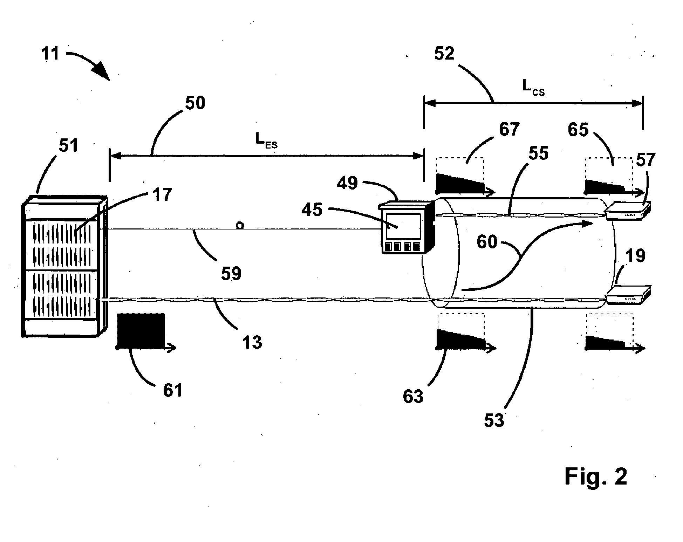

As shown in Figure 2, the second access node 45 located in the cabinet 49 may be connected to a backhaul link 59, which in turn may be connected to a device, such as a network switch (not shown), located in the central office 51. The backhaul link 59 may be an optical link. In particular, the backhaul link 59 may be part of an optical access network, such as a Passive Optical Network (PON). In an embodiment, the backhaul link may be part of the interconnection network 41.

Consequently, the access network architecture of the network 11 is often referred to as Fibre To The Cabinet (FTTC). In another embodiment, the second access node 45 may be located even closer to the CPE 21, e.g. in a building where the CPE 21 is located (Fibre To The Building, FTTB). Generally, the present invention is not limited to a certain type of network architecture. However, it can be particularly advantageously applied in access networks where different types of subscriber lines of different lengths are installed and run in parallel within a section (e.g. the lines 13 and 55 running in parallel at least within the second binder 53).

Because the first modem 19 at the central office 51 uses the comparatively slow DSL variant ADSLx and the second modem 57 at the cabinet 49 uses a comparatively high bit rate DSL variant VDSL, the scenario shown in Figure 2 is often referred to as "mixed central office / remote terminal deployment (mixed CO/RT deployment)". In this mixed deployment, some telecommunication lines 13, 36 are terminated in the central office 51 and some different telecommunication lines 55, 56 are terminated at the second access node 45 in the cabinet 49. In such a mixed CO/RT deployment, telecommunication lines 13, 36; 55, 56 using different DSL techniques are often located in the same binder 53. As a consequence, crosstalk (arrow 60) between the lines 13, 36; 55, 56 using different DSL techniques may occur because the lines 13, 55 use a common spectral band.

In particular, intensive crosstalk may occur from the second telecommunication line 55 to the first telecommunication line 13 because a downstream signal emitted by the second access node 45 is not attenuated at a cabinet side end of the second binder 55, whereas a downstream signal emitted by the first access node 17 of the central office 51 is attenuated within the first section 50 of the first telecommunication line 13. Thus, the attenuated downstream signal of the first line 13 within the second binder 53 can be heavily influenced by crosstalk originating from the non-attenuated downstream signal emitted by the second access node 45 over the second telecommunication line 55.

In order to avoid such excessive crosstalk from the second telecommunication line 55 to the first telecommunication line 13, Downstream Power Back-Off (DPBO) may be applied by the second access node 45 for the second telecommunication line 55. Basically, DPBO reduces the Power Spectral Density (PSD) of a signal transmitted over the second telecommunication line by modifying a PSD mask applied by the second access node 45 such that the second telecommunication line 55 causes at least essentially the same crosstalk, in particular far end crosstalk (FEXT) to the first telecommunication line 13 as if the second telecommunication line 55 would be terminated at the central office 51 instead of the cabinet 49. The condition according to which the shorter second telecommunication line 55 shall cause at least essentially the same crosstalk to the first telecommunication line as lines running in parallel to the first line along to both sections 50, 52, is also referred to as "equal-FEXT condition". DPBO is described in detail in the ITU-T recommendation G.977.1 (04/2009), in particular in Annex II thereof.

As illustrated in Figure 2, the first access node 17 at the central office 51 uses an unmodified PSD mask 61 for downstream transmission over the first line 13. The first section 50 of the first line 13 attenuates the downstream signal resulting in a first attenuated signal PSD 63 at the cabinet 49 at the cabinet side end of the second section 52 of the first line 13. The second section 52 of the first line 13 leads to a further attenuation of the downstream signal of the first access node 17. Thus the signal received by the modem 19 has a second attenuated PSD 65. In order to avoid excessive crosstalk from a downstream signal emitted by the second access node 45 over the second line 55 in the second binder 53 to the first line 13, the second access node 45 applies a modified PSD mask 67 to downstream transmissions, so that the downstream signal emitted by the second access node 45 has the reduced PSD at least in frequency ranges that are also occupied by the downstream signal or the first line 13.

In an embodiment, the modified PSD mask 67 defined in ITU-T recommendation G.997.1 paragraph 7.3.1.2.13.c is used. The modified PSD mask 67 according to the VDSL standard is defined as follows:

$$PEPSD(f) = DPBOEPSD(f) - \\ (DPBOESCMA + DPBOESCMB \cdot \sqrt{f} + DPBOESCMC \cdot f) \cdot \quad (1) \\ DPBOESEL$$

The symbol f stands for the frequency. DPBOEPSD is the maximum PSD mask permitted, e.g. the unmodified PSD mask 61. DPBOESCMA, DPBOESCMB, and DPBOESCMC, are DPBO configuration parameters modelling the cable attenuation of the first line in the first section 50 on the exchange-side of line 13. The DPBO configuration parameter DPBOESEL describes the electrical length of the first section 50 of the first line 13, also referred to as "E-side electrical length". An electrical length corresponds to attenuation created by cable at a given frequency, e.g. at 1 MHz. The electrical length is proportional to a physical loop length $L_{ES}$ of the first line 13 between the central office 51 and the cabinet 49 (length of the first section 50). That is DPBOESEL is directly proportional to $L_{ES}$.

The parameters DPBOESCMA, DPBOESCMB and DPBOESCMC depend on the cable type and the parameter DPBOEPSD is usually imposed by country-specific spectral regulations. As a consequence, the parameters DPBOESCMA, DPBOESCMB, DPBOESCMC and DPBOEPSD are typically network-wide parameters that are valid for all lines 13, 55, and particular for all second lines 55 of the network 11, irrespective of the position of the cabinet 49 with respect to the central office 51. However, the parameter DPBOESEL describing the electrical length of the first section 51 and depending on the physical length $L_{ES}$ of the first section 50 must be determined for each line 55, 56 or at least for each group of lines 55, 56 terminated in a specific cabinet 49, separately.

If an operator of the network 11 has a topology database from which the physical length $L_{ES}$ of the first section may be retrieved for each cabinet 49, the operator may determine the electrical length parameter DPBOESEL by using the above-mentioned proportionality. However, configuring the parameter DPBOESEL using the topology database is time-consuming and error-prone because access to the topology database must be provided and because there is the risk that the physical line length $L_{ES}$ stored in the topology database is not correct. Moreover, some operators may not have stored the physical length $L_{ES}$ of the first section 51 in the topology database for every cabinet 49. Other operators may not have a topology database at all. These operators may use manual measurement approaches in order to determine the length of the first section 50. Because wire line access networks typically have many cabinets 49, these measurements would be expensive and time-consuming.

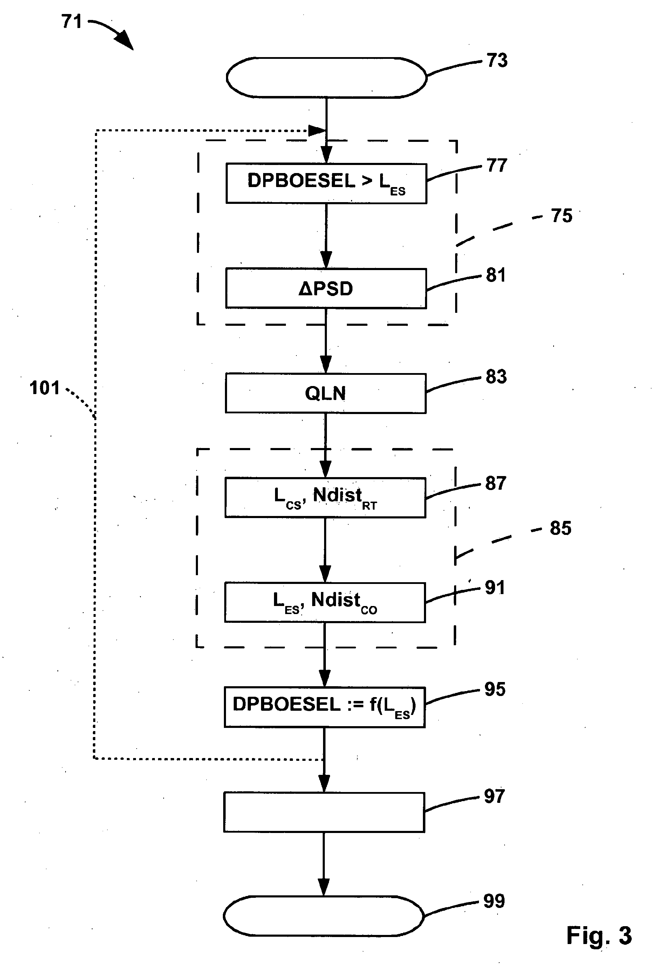

Figure 3 shows a flow chart of a method 71 for determining a value that characterizes the length (physical length or electrical length) of the first section 50 of the first telecommunication line automatically. The method 71 may be executed by a programmed computer. To this end, a computer program may be provided which may be stored on a storage element of the computer so that the computer will execute the method 71 when running that computer program. In particular, the method may be executed by at least one of the controllers 25, 31, 43, 47. In a preferred embodiment, the method 71 may be executed by the monitoring station 39, in particular by the third controller 43. The monitoring station 39 or the third controller 43 may be part of a network analyzer. The network analyzer may include Dynamic Line Management (DLM) functionality. In an embodiment, the method 71 may be part of this DLM functionality. However, the method 71 may also be executed on different nodes such as one of the access nodes 17 or 45.

After a start 73 of the method 71, a block 75 is executed for setting DPBO configuration parameters of the second access node 45 for the second line 55 and third lines 56 to conservative settings so that crosstalk caused by the first telecommunication line 13 dominates the crosstalk caused by other telecommunication lines 55, 56 connected to the second access node 45 and being part of the second binder 53. To this end, block 75 may select a transmit power signal density of a signal emitted by the second access node 45 to the at least one third telecommunication line 56 (i.e. telecommunication line connected to the second access node 45 and going along the second telecommunication line 55 so that the second telecommunication line 55 is subject to crosstalk caused by the third telecommunication line(s) 56) such that crosstalk caused by the first telecommunication line 13 dominates the crosstalk caused by the third telecommunication lines 56. In an embodiment, selecting such a transmit power signal density may include using an appropriate modified PSD mask 67 at the second access node 45 for the third telecommunication lines 56.

The appropriate modified PSD mask 67 may be selected by setting the parameters of equation (1) in a suitable way. In the shown embodiment, the block 75 has a step 77, that selects the parameter DPBOESEL such that it corresponds to a line length greater than a maximum physical line length $L_{ES}$ that may occur in the network 11. The reason for setting the electrical line length parameter DPBOESEL by step 77 can be explained with the help of a mathematical model of the crosstalk, e.g. the FTXT model described in the ITU-T recommendation G.996.1, paragraph 7.4.1:

$$
\begin{aligned}
\mathrm{FEXT}(f,L) = \mathrm{PSD}(f) + \\
10 \cdot \log_{10}\left(7{,}74.10^{-21} \cdot Ndist^{0.6} \cdot (3.28 \cdot L) \cdot f^2\right) + \\
\mathrm{Hlog}(L,f)
\end{aligned}
\tag{2}
$$

In equation (2), PSD(f) stands for the power spectral density of the disturbing signal, Ndist is the number of disturbers, and L is the coupling length in meters. Hlog(f) is the magnitude of the channel frequency response, i.e. the transfer function of the considered telecommunication line. The channel frequency response may be modelled as follows:

$$
\mathrm{Hlog}(L,f) = -(A + B \cdot \sqrt{f} + C \cdot f) \cdot L
\tag{3}
$$

The constants A, B, C characterize the attenuation of the considered telecommunication line (cable attenuation). The parameters A, B and C correspond to the cable model parameters DPBOESCMA, DPBOESCMB and DPBOESCMC used in equation (1). The constants A, B, C can be scaled such that L is either the physical line length $L_{ES}$ or the electrical length, because the physical length and the electrical length are directly proportional with respect to each other.

The above equation can be applied to the mixed central office remote terminal environment shown in Figures 1 and 2 in order to predict a quiet line noise QLN that can be measured at the second telecommunication line 45. The quiet line noise has three components: crosstalk $FEXT_{CO}$ originating from the lines 13, 36, terminated at the central office (e.g. ADSLx lines), crosstalk $FEXT_{RT}$ originating from the third telecommunication lines 56 (e.g. further VDSL lines arranged in parallel to the line 45 in the second binder 53), and a receiver noise floor minQLN.

The crosstalk from the third lines 56 can be written as:

$$\text{FEXT}_{\text{RT}}(f) = \text{PSD}_{\text{RT}}(f) + 10.\log_{10}\left(7,74.10^{-21} \cdot Ndist_{RT}^{0.6} \cdot (3.28.L_{CS}) \cdot f^2\right) + \quad (4)$$
$$\text{Hlog}(L_{CS}, f)$$

$\text{PSD}_{\text{RT}}$ stands for the PSD of the signal emitted by the second access node 45 over the third lines 56, $Ndist_{RT}$ is the number VDSL disturbers (e.g. number of third telecommunication lines 56), and $L_{CS}$ is the loop length from the cabinet 49 to the customer premises 21 (length of second section 52).

The crosstalk from the lines 13, 36 connected to the first access node 17 can be written as:

$$\text{FEXT}_{\text{CO}}(f) = \text{PSD}_{\text{CO}}(f) + \text{Hlog}(L_{ES}, f)$$
$$+ 10.\log_{10}\left(7,74.10^{-21} \cdot Ndist_{CO}^{0.6} \cdot (3.28.L_{CS}) \cdot f^2\right) \quad (5)$$
$$+ \text{Hlog}(L_{CS}, f)$$

$\text{PSD}_{\text{CO}}$ is the PSD of the signals emitted by the first access node 17 in the central office 51 (e.g. the PSD of the ADSLx signal emitted by the first access node 17), $Ndist_{CO}$ is the number of disturbers (e.g. number of disturbers ADSLx lines 13, 36), $L_{ES}$ is the length of the lines 13, 36 between the central office 51 cabinet 49 (length of the first section 50).

The overall quiet line noise QLN can be modelled as the sum of the two types of crosstalk and receiver noise floor minQLN:

$$QLN = 10 \cdot \log_{10}\left(10^{\frac{FEXT_{RT}}{10}} + 10^{\frac{FEXT_{CO}}{10}} + 10^{\frac{\min QLN}{10}}\right) \quad (6)$$

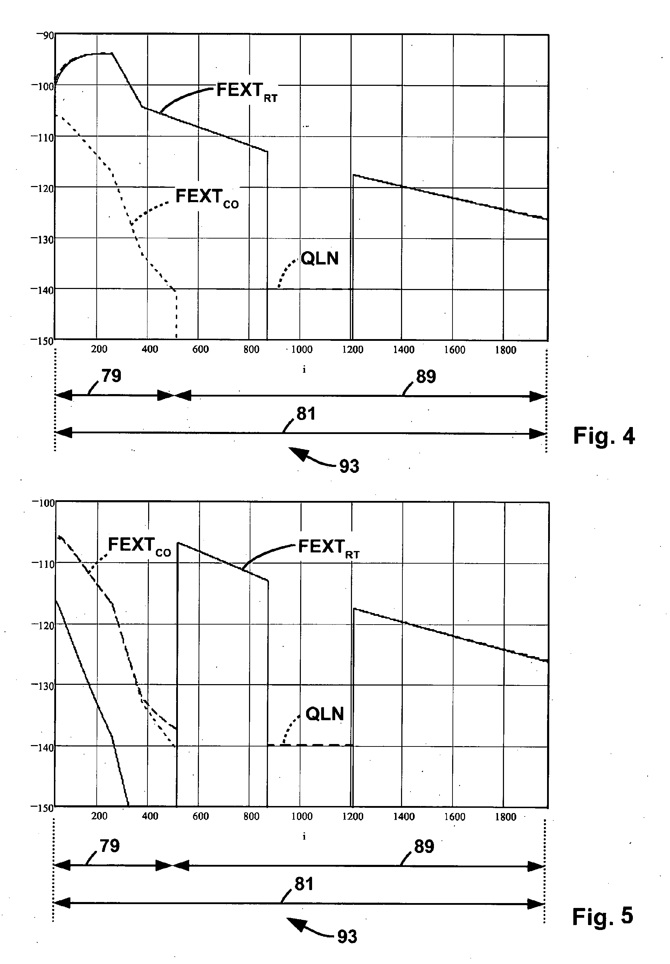

Figure 4 shows both the resulting QLN as well as the components $\text{FEKT}_{\text{RT}}$ and $\text{FEXT}_{\text{CO}}$ as a function of the frequency f. The frequency f is shown in the x-axis of fig. 4 as a tone index i. The frequency in Hz can be obtained by multiplying the tone index i with the bandwidth of a single Discrete Multi-tone Transmission (DMT) carrier used in ADSLx and VDSL systems. In the shown embodiment, the bandwidth of a single carrier is 4.3125 kHz. The y-axis shows the frequency dependent value of the PSD in dBm/Hz. For the sake of simplicity, Figures 4 and 5 show the QLN and its components $\text{FEXT}_{\text{RT}}$ and $\text{FEXT}_{\text{CO}}$ in downstream direction only. As a consequence the diagrams of $\text{FEXT}_{\text{RT}}$ and $\text{FEXT}_{\text{CO}}$ in Figures 4 and 5 have a gap in a region around tone index 1000. This region may be used for upstream transmissions.

Because a first frequency range 79 used for the signals on the first telecommunication line 13 and the further telecommunication lines 36 is limited to a frequency corresponding to a tone index of 512, the component $\text{FEXT}_{\text{CO}}$ is present for comparatively low frequencies (less than tone index 512) only. The signals on the third telecommunication lines 56 use much higher frequencies (up to tone index 2048 or 4096). The crosstalk originating from the at least one third telecommunication lines 56 has therefore a larger second frequency range 81. The second frequency range 81 is the frequency range of a signal transmitted over the second line 55 and/or the third line 56, e.g. the frequency range of a VSDL signal. In the shown embodiment, the first frequency range 79 extends from tone index 1 to tone index 512 and the second frequency range 81 extends from tone index 1 to tone index 2048. In another embodiment, the second frequency range 81 is larger than in the shown embodiment and extends from tone index 1 to tone index 4096. As can be seen in Figures 4 and 5, the second frequency range 81 completely overlaps the first frequency range. However, the method and devices described herein can also be applied in connection with networks 11, where a part of the first frequency range 79 does not belong to the second frequency range 81.

In the example shown in Figure 4 DPBO is not applied and the second access node 45 uses the unmodified PSD mask 61. As a consequence, the resulting QLN is dominated by the component $\text{FEXT}_{\text{RT}}$.

When applying DPBO on the third telecommunication lines 56, the modified PSD 67 also referred to as "shaped PSD" is used instead of the unmodified PSD of equation (4). This leads to the following equation:

$$\text{FEXT}_{\text{RT}}(f) = ShapedPSD_{RT}(f) + $$
$$10 \cdot \log_{10}\left(7,74.10^{-21} \cdot .Ndist_{RT}^{0.6} \cdot (3.28.L_{CS}) \cdot f^2\right) + \text{Hlog}\left(L_{CS}, f\right)$$

$$(7)$$

where

$$ShapedPSD_{RT}(f) = PSD_{RT}(f) -$$
$$(\text{DPBOESCMA} + \text{DPBOESCMB} \sqrt{f} + \text{DPBOESCMC} \, f) \cdot \text{DPBOESEL}$$

Figure 5 shows a plot of the resulting QLN and its components $\text{FEXT}_{\text{RT}}$ and $\text{FEXT}_{\text{CO}}$ when performing DPBO as modelled in equation (7). In the first frequency range 79 - which constitutes a common frequency range used on all telecommunication lines 13, 36, 55, 56 - the crosstalk $\text{FEXT}_{\text{RT}}$ from the third telecommunication lines 56 is less than the crosstalk $\text{FEXT}_{\text{CO}}$ from the telecommunication lines 13, 36.

Block 75 serves to make sure that the component $\text{FEXT}_{\text{CO}}$ is at least essentially dominant compared to the component $\text{FEXT}_{\text{RT}}$. Consequently, step 77 ensures that the result of equation (5) is higher than the result of equation (7). Assuming that the number of the third lines 56 is equal to the number of lines 13, 36 connected to the first access node 17, the following constraint is obtained:

$$(\text{DPBOESCMA} + \text{DPBOESCMB} \cdot \sqrt{f} + \text{DPBOESCMC} \cdot f) \cdot \text{DPBOESEL}$$
$$> H \log(L_{ES}, f)$$

$$(8)$$

Further assuming the parameter DPBOESCMA, DPBOESCMB and DPBOESCMC being set correctly such as they reliably model the attenuation of the telecommunication lines, i.e. that the expression in brackets on the left side of equation (8) corresponds to the transfer function Hlog on the right side of equation (8), the constraint of step 77 is obtained:

$$DPBOESEL > L_{ES}$$

$$(9)$$

In an embodiment, block 75 has only step 77. However, in the shown embodiment, block 75 includes a further step 81. Step 81 performs an additional power reduction by subtracting a constant, frequency-independent offset ΔPSD from the PSD of the signal transmitted by the second access node 45. The subtraction of the offset ΔPSD may be applied in addition to a setting of the parameter DPBOESEL in step 77.

Step 81 may be applied in particular if $Ndist_{RT}$ of third line 56 is greater than the number $Ndist_{CO}$ of lines 13, 36 connected to the first access node 17. By inspecting the equations (5) and (7) assuming that the actual length $L_{ES}$ is equal to the maximum boundary configured for the DPBOESEL parameter, the difference between the equations (5) and (7) is:

$$FEXT_{CO} - FEXT_{RT} = 10 \cdot \log_{10}\left(Ndist_{CO}^{0.6}\right) - 10 \cdot \log_{10}\left(Ndist_{RT}^{0.6}\right)$$
$$= 6 \cdot \log_{10}\left(\frac{Ndist_{CO}}{Ndist_{RT}}\right)$$

$$(10)$$

Because the difference between the two components $\text{FEXT}_{\text{CO}}$ and $\text{FEXT}_{\text{RT}}$ is a frequency-independent offset, the constant power back-offset ΔPSD may be applied in order to compensate a comparatively high crosstalk due to a larger number of third telecommunication lines 56 than a number of telecommunication lines 13, 36 connected to the first access node 17.

Preferably, the offset ΔPSD is in the range between 5dB and 20dB, preferably between 7dB and 15 dB. In a preferred embodiment, the offset is ΔPSD=10dB. This value of the offset ΔPSD guarantees that the component $\text{FEXT}_{\text{CO}}$

is dominant with respect to $FEXT_{RT}$ for a number of disturbers 48 times higher than the number of lines 13, 36 connected to the first access node 17, since $6 \cdot \log_{10}(48) = 10dB$.

If the method 71 is executed on the monitoring station 39 or to another node connected to the interconnection network 41, the parameters DPBOESEL and/or ΔPSD may be communicated over the interconnection network 41 to the second access node 45 in order to change the DPBO settings of the second access node accordingly.

After the DPBO parameters have been set in block 75, step 83 of the method 71 is executed in order to retrieve quiet line noise QLN data from the second access node 45. The retrieved quiet line noise data QLN characterizes a quiet line noise measured by the second access node 45 on the second telecommunication line 55.

After step 83, the method 71 executes a block 85 that determines a length value such as the physical line length $L_{ES}$ that characterizes the length first section 50 depending on the quiet line noise measurement QLN. Block 85 may include a step 87 that performs a first fitting. The first fitting comprises fitting the above-described mathematical model of the quiet line noise using the crosstalk model specified in equation (7) to the measured quiet line noise QLN. Results of this first fitting performed in step 87 include the length $L_{CS}$ of the second section 52 and the number of disturbers $Ndist_{RT}$ within the second section 52, in particular within the second binder 53. In a preferred embodiment, the first fitting in step 87 is performed on a sub-band 89 that is used for transmissions over the second telecommunication line 55 and the third telecommunication lines 56 only and not for transmissions over the first telecommunication line 13 and the further telecommunication line 36 connected to the first access node 17. In the embodiment shown in Figure 4 and Figure 5, this sub-band 89 may correspond to the second frequency range 81 with the first frequency range 79 excluded. In the shown exemplary embodiment, the sub-band 89 therefore corresponds to higher VDSL2 frequencies used on the second line 55 and third line 56 only, i.e. the sub-band 89 corresponds to the second frequency range 81 with the first frequency range 79 excluded (e.g. tone index 513 to 2048). However, in other embodiments, a different sub-band 89 may be applied. For example, the sub-band 89 may be a proper subset of the second frequency range 81 with the first frequency range 79 excluded.

Block 85 may comprise a further step 91 that performs a second fitting. The second fitting comprises fitting the model of the quiet line noise using the crosstalk model specified in equation (5) to the measured quiet line noise QLN. In a preferred embodiment, the second fitting is performed for a common sub-band 93. At least a part of the common sub-band 93 is used by all telecommunication lines 13, 36, 55, 56. As shown in Figures 4 and 5, this common sub-band 93 may correspond to the whole second frequency range 81. However, in other embodiments, any different sub-band may be selected as the common sub-band 93 that includes at least a part of the first frequency range 79 and the second frequency range 81. For example, the common sub-band may include only a part of the first frequency range 79 and/or only a part of the second frequency range 81.

In order to perform the first fitting 87 or the second fitting 91 on a particular sub-band 89, 93 only, in an embodiment, the method 71 may consider the quiet line noise measurement QLN and/or the respective quiet line noise model for frequencies residing in the respective sub-band 89, 93 only.

In an embodiment, parameters $L_{CS}$, $Ndist_{RT}$ determined in the first fitting 87 are used as model parameters for the mathematical model used in the second fitting 91. The result of the second fitting 91 is the physical line length $L_{ES}$ of the first section 50 and a number of disturbers $Ndist_{CO}$ on the first section.

In another embodiment, step 87 is omitted and step 91 is performed without using the results of the first fitting of step 87. In this embodiment, the values of the parameters $L_{CS}$ and/or $Ndist_{RT}$ may be obtained by another suitable way. For example, these parameters may be estimated with or without using information about the network topology.

After block 85, a step 95 is executed that calculates the electrical length depending on the physical line length $L_{ES}$ of the first section 50 determined e.g. in step 91. Because the electrical length DPBOESEL of the first section 50 is proportional to the physical line length $L_{ES}$ of the first section 50, step 95 may include multiplying the physical line length $L_{ES}$ of the first section 50 with a constant factor.

In another embodiment, the method 71 determines the electrical line length DPBOESEL directly instead of the physical line length $L_{ES}$. In this embodiment, step 95 may be omitted. Calculating the electrical line length directly, e.g. in block 85 may be implemented by appropriately scaling the above-described model equations.

A step 97 of the method 71 configures the second access node 45 with the parameter DPBOESEL determined by the method 71. To this end, step 97 may transmit the parameter DPBOESEL over the interconnection network 41 to the second access node 45. In case that the method includes the step 81, step 97 may comprise removing the constant offset ΔPSD from the PSD mask applied by the second access node 45 for the third telecommunication lines 56. After step 97, the method may be terminated in a step 99.

In a preferred embodiment, the length value $L_{ES}$ may be determined by performing at least some of the steps of the method 71, in particular block 75, step 83 and block 85 multiple times for different lines selected as the second line 55 from the lines connected to the second access node 45. To this end, the method 71 may perform multiple iterations (arrow 101). For example, each time said at least some steps of the method 71 are executed, a line from the lines 55, 56 connected to the second access node 45 is selected as the second telecommunication line 55 and the length value $L_{ES}$ or DPBOESEL that characterizes the length of the lines 13, 36 connected to the first access node 17 is calculated.

Then the multiple values characterizing the length of the first section 50 are averaged in order to obtain a more accurate length value $L_{ES}$, DPBOESEL.

To sum up, the method 71 allows for automatically determining a value describing the length $L_{ES}$ of the first section 50 of the line 13. To this end, block 75 applies very conservative DPBO settings on the second access node 45 so that the component $FEXT_{CO}$ dominates the quiet line noise QLN in the first frequency range 79. Then the measured quiet line noise QLN is retrieved from the second access node. Block 85 performs a two-step fitting operation in order to determine length value $L_{ES}$, DPBOESEL. Finally, the second access node 45 is reconfigured with optimum DPBO settings, in particular with the length value DPBOESEL determined by the present method 71. In particular, when using the method as part of a DLM tool, operators using the network 11 with a mixed central office / remote terminal environment, the DPBO parameters can be configured automatically in a reliable and cost efficient way.

**Claims**

1. Method (71) for determining a length value ($L_{ES}$, DPBOESEL) characterizing a length ($L_{ES}$) of a first section (50) of a first telecommunication line (13), a second section (52) of the first telecommunication line (13) being arranged along at least one second telecommunication line (55) so that the first telecommunication line (13) causes crosstalk (60) to the second telecommunication line (55), wherein the method (71) comprises

   - acquiring (83) line noise measurement data (QLN) characterizing quiet line noise of the second telecommunication line (55); and
   - determining (85) the length value ($L_{ES}$) based on the line noise measurement data (QLN);

   **characterized in that** the second telecommunication line (55) is subject to crosstalk caused by at least one third telecommunication line (56) arranged along the second telecommunication line (55), wherein the method (71) comprises selecting (75) a transmit power signal density of at least one data signal transmitted over the third telecommunication line (56) such that the crosstalk caused by the first telecommunication line (13) dominates the crosstalk caused by the third telecommunication line (56).

2. Method (71) according to claim 1, wherein the method (71) comprises determining (95) depending on the length value ($L_{ES}$) a configuration parameter (DPBOESEL) for downstream power back-off to be applied on a signal transmitted over the second telecommunication line (55).

3. Method (71) according to claim 1 or 2, wherein the method (71) comprises determining the length value ($L_{ES}$, DPBOESEL) depending on a common sub-band (93) of the line noise, at least a part of the common sub-band residing within a first frequency range (79) of a first data signal transmitted over the first telecommunication line (13) and a second frequency range (81) of a second data signal transmitted over a third telecommunication line (56) that is arranged along the second telecommunication line (55) so that the third telecommunication line (56) causes crosstalk to the second telecommunication line (55).

4. Method (71) according to claim 3, wherein the method (71) comprises estimating parameters related to crosstalk to the second line (55), preferably a coupling length ($L_{CS}$) and/or a number of disturbers ($Ndist_{RT}$), said estimating depending on a further sub-band (89) of the line noise, the further sub-band (89) residing outside of the first frequency range (79) and within the second frequency range (81).

5. Method (71) according to claim 4, wherein the method (71) comprises determining the length value ($L_{ES}$) depending on the estimated parameters ($L_{CS}$, $Ndist_{RT}$) related to the crosstalk.

6. Method (71) according to claim 4 or 5, wherein determining the length value ($L_{ES}$) and/or estimating the parameters ($L_{CS}$, $Ndist_{RT}$) related to the crosstalk comprises fitting a model of the crosstalk to the line noise measurement data.

7. Method (71) according to claim 1, wherein selecting (75) the transmit power signal density of the third signal comprises selecting (77) a downstream power back-off parameter (DPBOESEL) such that it characterizes a length greater than a maximum possible length of the first section (50).

8. Method (71) according to one of the precedent claims, wherein selecting (75) the transmit power density comprises applying (81) a frequency independent offset ($\Delta PSD$) to a power signal density mask (PSD), preferably to the power signal density mask obtained when performing downstream power back-off.

9. Method (71) according to one of the precedent claims, wherein the telecommunication lines (13, 36, 55, 56) are digital subscriber lines, wherein the first telecommunication line (13) extends from a central office (51) over a remote site (49) to customer premises equipment (21), the first section (50) corresponding to a exchange side of the first line (13) between the central office (51) and the remote site (49), and wherein the second telecommunication line (55) and the third telecommunication line (56) extend from the remote site (49) to further customer premises equipment (21).

10. Method (71) according to one of the precedent claims, wherein a line specific length value is determined for each second telecommunication line (55) of a plurality of different second telecommunication lines (55, 56), and wherein the length value ($L_{ES}$, DPBOESEL) is calculated depending on the line specific length values, preferably by determining a mean value of the line specific length values.

11. Device (25, 43, 47) for determining a length value ($L_{ES}$, DPBOESEL) characterizing a length ($L_{ES}$) of a first section (50) of a first telecommunication line (13), a second section (52) of the first telecommunication line (13) being arranged along at least one second telecommunication line (55) so that the first telecommunication line (13) causes crosstalk (60) to the second telecommunication line (55), wherein the device (25, 43, 47) is operable for

- acquiring (83) line noise measurement data (QLN) characterizing quiet line noise of the second telecommunication line (55); and
- determining (85) the length value ($L_{ES}$) based on the line noise measurement data (QLN);

**characterized in that** the second telecommunication line (55) is subject to crosstalk caused by at least one third telecommunication line (56) arranged along the second telecommunication line (55), wherein the device (25, 43, 47) is operable for selecting (75) a transmit power signal density of at least one data signal transmitted over the third telecommunication line (56) such that the crosstalk caused by the first telecommunication line (13) dominates the crosstalk caused by the third telecommunication line (56).

12. Device (25, 43, 47) according to claim 11, wherein the device (25, 43, 47) is operable, preferably programmed, for executing a method (71) according to one of claims 1 to 10.

13. Monitoring node (39) connectable to an access network (11), the network (11) comprising at least one access node (45), wherein the monitoring node (39) comprises a device (25, 43, 47) according to claim 13.

14. Computer program product, preferably a computer readable storage medium (29), comprising a computer program that is programmed to execute a method (71) according to one of claims 1 to 10 when run on a computer.

**Patentansprüche**

1. Verfahren (71) zur Bestimmung eines Längenwerts ($L_{ES}$, DPBOESEL) zur Kennzeichnung einer Länge ($L_{ES}$) eines ersten Abschnitts (50) einer ersten Telekommunikationsleitung (13), wobei ein zweiter Abschnitt (52) der ersten Telekommunikationsleitung (13) entlang mindestens einer zweiten Telekommunikationsleitung (55) verläuft, sodass die erste Telekommunikationsleitung (13) ein Übersprechen (60) der zweiten Telekommunikationsleitung (55) verursacht und wobei das Verfahren (71) umfasst:

- Beschaffung (83) von Messdaten zum Kanalrauschen (QLN) zur Kennzeichnung des Leerkanalrauschens der zweiten Telekommunikationsleitung (55); und
- Bestimmung (85) des Längenwerts ($L_{ES}$) auf der Grundlage der Messdaten zum Kanalrauschen (QLN);

**dadurch gekennzeichnet, dass** die zweite Telekommunikationsleitung (55) einem Übersprechen durch mindestens eine dritte Telekommunikationsleitung (56) unterliegt, angeordnet entlang der zweiten Telekommunikationsleitung (55), wobei die Methode (71) das Auswählen (75) einer Leistungsdichte für die Signalübertrag von mindestens einem über die dritte Telekommunikationsleitung (56) übertragenen Datensignal umfasst, dergestalt, dass das von der ersten Telekommunikationsleitung (13) verursachte Übersprechen das von der dritten Telekommunikationsleitung (56) verursachte Übersprechen dominiert.

2. Verfahren (71) nach Anspruch 1, wobei das Verfahren (71) in Abhängigkeit vom Längenwert ($L_{ES}$) die Bestimmung (95) eines Konfigurationsparameters (DPBOESEL) für den nachgelagert auf ein über die zweite Telekommunikationsleitung (55) übermitteltes Signal anzuwendenden Power-Back-Off umfasst.

3. Verfahren (71) nach Anspruch 1 oder 2, wobei das Verfahren (71) die Bestimmung des Längenwerts ($L_{ES}$, DPBOESEL) in Abhängigkeit von einem gemeinsamen Subband (93) des Kanalrauschens umfasst, wobei mindestens ein Teil des gemeinsamen Subbands in einem ersten Frequenzbereich (79) eines ersten über die erste Telekommunikationsleitung (13) übermittelten Datensignals und in einem zweiten Frequenzbereich (81) eines zweiten Datensignals angesiedelt sein muss, das über eine dritte Telekommunikationsleitung (56) übertragen wird, die so entlang der zweite Telekommunikationsleitung (55) angeordnet ist, dass die dritte Telekommunikationsleitung (56) ein Übersprechen der zweiten Telekommunikationsleitung (55) verursacht.

4. Verfahren (71) nach Anspruch 3, wobei das Verfahren (71) das Abschätzen von Parametern im Zusammenhang mit dem Übersprechen zur zweiten Leitung (55) vorzugsweise einer Kopplungslänge (Lcs) und/oder einer Anzahl von Störern (Disturber; $Ndist_{RT}$) umfasst, wobei besagtes Abschätzen von einem weiteren Subband (89) des Kanalrauschens abhängig ist, wobei das weitere Subband (89) außerhalb des ersten Frequenzbereichs (79) und innerhalb eines zweiten Frequenzbereichs (81) angesiedelt ist.

5. Verfahren (71) nach Anspruch 4, wobei das Verfahren (71) die Bestimmung des Längenwerts ($L_{ES}$) in Abhängigkeit von den abgeschätzten Parametern (Lcs, $Ndist_{RT}$) im Zusammenhang mit dem Übersprechen umfasst.

6. Verfahren (71) nach Anspruch 4 oder 5, wobei die Bestimmung des Längenwerts ($L_{ES}$) und/oder der mit dem Übersprechen zusammenhängenden Parameter (Lcs, $Ndist_{RT}$) ein Modell des Übersprechens zu den Kanalrauschen-Messdaten umfasst.

7. Verfahren (71) nach Anspruch 1, wobei das Auswählen (75) der Leistungsdichte für die Signalübertrag des dritten Signals das Auswählen (77) eines nachgelagerten Power-Back-Off-Parameters (DPBOESEL) umfasst, dergestalt, dass er eine Länge vorgibt, die größer als die maximale mögliche Länge des ersten Abschnitts (50) ist.

8. Verfahren (71) nach einem der vorstehenden Ansprüche, wobei die Auswahl (75) der Übertragungsleistungsdichte die Anwendung (81) eines frequenzunabhängigen Versatzes (APSD) auf die Maske eines Signal-Leistungsdichtespektrums (PSD) umfasst, vorzugsweise auf die Leistungsdichtespektrums-Maske eines nachgelagerten Power-Back-Offs.

9. Verfahren (71) nach einem der vorstehenden Ansprüche, wobei die Telekommunikationsleitungen (13, 36, 55, 56) digitale Teilnehmeranschlussleitungen sind, wobei die erste Telekommunikationsleitung (13) von einer Vermittlungsstelle (51) über einen entfernten Standort (49) zu einem Teilnehmer-Endgerät (21) reicht, wobei der erste Abschnitt (50) dem amtsseitigen Abschnitt der ersten Leitung (13) zwischen der Vermittlungsstelle (51) und dem entfernten Standort (49) entspricht und wobei die zweite Telekommunikationsleitung (55) und die dritte Telekommunikationsleitung (56) vom entfernen Standort (49) zu weiteren Teilnehmer-Endgeräten (21) reichen.

10. Verfahren (71) nach einem der vorstehenden Ansprüche, wobei ein leitungsspezifischer Längenwert für jede zweite Telekommunikationsleitung (55) aus einer Vielzahl verschiedener zweiter Telekommunikationsleitungen (55, 56) ermittelt wird und wobei der Längenwert ($L_{ES}$, DPBOESEL) in Abhängigkeit des leitungsspezifischen Längenwerts berechnet wird, indem ein Mittelwert der leitungsspezifischen Längenwerte ermittelt wird.

11. Vorrichtung (25, 43, 47) zur Bestimmung eines Längenwerts ($L_{ES}$, DPBOESEL) zur Kennzeichnung einer Länge ($L_{ES}$) eines ersten Abschnitts (50) einer ersten Telekommunikationsleitung (13), wobei ein zweiter Abschnitt (52) der ersten Telekommunikationsleitung (13) entlang mindestens einer zweiten Telekommunikationsleitung (55) verläuft, so dass die erste Telekommunikationsleitung (13) ein Übersprechen (60) der zweiten Telekommunikationsleitung (55) verursacht und wobei die Vorrichtung (25, 43, 47) betriebsfähig ist für

- die Beschaffung (83) von Messdaten zum Kanalrauschen (QLN) zur Kennzeichnung des Leerkanalrauschens der zweiten Telekommunikationsleitung (55); und
- die Bestimmung (85) des Längenwerts ($L_{ES}$) auf der Grundlage der Messdaten zum Kanalrauschen (QLN);

**dadurch gekennzeichnet, dass** die zweite Telekommunikationsleitung (55) einem Übersprechen durch mindestens eine dritte Telekommunikationsleitung (56) unterliegt, angeordnet entlang der zweiten Telekommunikationsleitung (55), wobei die Vorrichtung (25, 43, 47) betriebsbereit ist für das Auswählen (75) einer Leistungsdichte für die Signalübertrag von mindestens einem über die dritte Telekommunikationsleitung (56) übertragenen Datensignal, dergestalt, dass das von der ersten Telekommunikationsleitung (13) verursachte Übersprechen das von der dritten Telekommunikationsleitung (56) verursachte Übersprechen dominiert.

12. Vorrichtung (25, 43, 47) nach Anspruch 11, wobei die Vorrichtung (25, 43, 47) für das Durchführen eines Verfahrens (71) gemäß einem der Ansprüche 1 bis 10 betriebsbereit ist, vorzugsweise durch Programmierung.

13. Überwachungsknoten (39), anschließbar an ein Zugangsnetzwerk (11), wobei das Zugangsnetzwerk (11) mindestens einen Zugangsknoten (45) umfasst, wobei der Überwachungsknoten (39) eine Vorrichtung (25, 43, 47) nach Anspruch 13 umfasst.

14. Computerprogramm-Produkt, vorzugsweise ein computerlesbares Speichermedium (29), ein Computerprogramm umfassend, das zur Durchführung eines Verfahrens (71) nach den Ansprüchen 1 bis 10 programmiert ist, wenn es auf einem Computer ausgeführt wird.

**Revendications**

1. Procédé (71) pour déterminer une valeur de longueur ($L_{ES}$, DPBOESEL) caractérisant une longueur ($L_{ES}$) d'une première section (50) d'une première ligne de télécommunication (13), une deuxième section (52) de la première ligne de télécommunication (13) étant disposée le long d'au moins une deuxième ligne de télécommunication (55) de sorte que la première ligne de télécommunication (13) provoque une diaphonie (60) au niveau de la deuxième ligne de télécommunication (55), le procédé (71) comprenant les étapes suivantes

   - acquérir (83) des données de mesure du bruit sur la ligne (QLN) caractérisant un bruit sur la ligne au repos de la deuxième ligne de télécommunication (55) ; et
   - déterminer (85) la valeur de longueur ($L_{ES}$) en fonction des données de mesure du bruit sur la ligne (QLN) ;

   **caractérisé en ce que** la deuxième ligne de télécommunication (55) est soumise à une diaphonie provoquée par au moins une troisième ligne de télécommunication (56) disposée le long de la deuxième ligne de télécommunication (55), le procédé (71) comprenant la sélection (75) d'une densité de signal de puissance de transmission d'au moins un signal de données transmis sur la troisième ligne de télécommunication (56) de sorte que la diaphonie provoquée par la première ligne de télécommunication (13) domine la diaphonie provoquée par la troisième ligne de télécommunication (56).

2. Procédé (71) selon la revendication 1, le procédé (71) comprenant la détermination (95), en fonction de la valeur de longueur ($L_{ES}$), d'un paramètre de configuration (DPBOESEL) pour la réduction de puissance aval à appliquer sur un signal transmis sur la deuxième ligne de télécommunication (55).

3. Procédé (71) selon la revendication 1 ou 2, le procédé (71) comprenant la détermination de la valeur de longueur ($L_{ES}$, DPBOESEL) en fonction d'une sous-bande commune (93) du bruit sur la ligne, au moins une partie de la sous-bande commune résidant à l'intérieur d'une première plage de fréquences (79) d'un premier signal de données transmis sur la première ligne de télécommunication (13) et une deuxième plage de fréquences (81) d'un deuxième signal de données transmis sur une troisième ligne de télécommunication (56) qui est disposée le long de la deuxième ligne de télécommunication (55) de sorte que la troisième ligne de télécommunication (56) provoque une diaphonie au niveau de la deuxième ligne de télécommunication (55).

4. Procédé (71) selon la revendication 3, le procédé (71) comprenant l'estimation de paramètres relatifs à une diaphonie au niveau de la deuxième ligne (55), de préférence une longueur de couplage ($L_{CS}$) et/ou un nombre d'éléments perturbateurs ($Ndist_{RT}$), ladite estimation dépendant d'une autre sous-bande (89) du bruit sur la ligne, l'autre sous-bande (89) résidant à l'extérieur de la première plage de fréquences (79) et à l'intérieur de la deuxième plage de fréquences (81).

5. Procédé (71) selon la revendication 4, le procédé (71) comprenant la détermination de la valeur de longueur ($L_{ES}$) en fonction des paramètres estimés ($L_{CS}$, $Ndist_{RT}$) relatifs à la diaphonie.

6. Procédé (71) selon la revendication 4 ou 5, dans lequel la détermination de la valeur de longueur ($L_{ES}$) et/ou l'estimation des paramètres ($L_{CS}$, $Ndist_{RT}$) relatifs à la diaphonie comprennent l'adaptation d'un modèle de la diaphonie aux données de mesure du bruit sur la ligne.

**7.** Procédé (71) selon la revendication 1, dans lequel la sélection (75) de la densité de signal de puissance de transmission du troisième signal comprend la sélection (77) d'un paramètre de réduction de puissance aval (DPBOESEL) tel qu'il caractérise une longueur supérieure à une longueur possible maximum de la première section (50).

**8.** Procédé (71) selon l'une des revendications précédentes, dans lequel la sélection (75) de la densité de puissance de transmission comprend l'application (81) d'un décalage indépendant de la fréquence (ΔPSD) à un masque de densité de signal de puissance (PSD), de préférence au masque de densité de signal de puissance obtenu lors de l'exécution d'une réduction de puissance aval.

**9.** Procédé (71) selon l'une des revendications précédentes, dans lequel les lignes de télécommunication (13, 36, 55, 56) sont des lignes d'abonné numérique, dans lequel la première ligne de télécommunication (13) s'étend depuis un central (51) sur un site distant (49) vers un équipement des locaux d'abonné (21), la première section (50) correspondant à un côté d'échange de la première ligne (13) entre le central (51) et le côté distant (49), et dans lequel la deuxième ligne de télécommunication (55) et la troisième ligne de télécommunication (56) s'étendent depuis le site distant (49) vers un autre équipement des locaux d'abonné (21).

**10.** Procédé (71) selon l'une des revendications précédentes, dans lequel une valeur de longueur spécifique à la ligne est déterminée pour chaque deuxième ligne de télécommunication (55) d'une pluralité de deuxièmes lignes de télécommunication différentes (55, 56), et dans lequel la valeur de longueur ($L_{ES}$, DPBOESEL) est calculée en fonction des valeurs de longueur spécifique à la ligne, de préférence en déterminant une valeur moyenne des valeurs de longueur spécifique à la ligne.

**11.** Dispositif (25, 43, 47) pour déterminer une valeur de longueur ($L_{ES}$, DPBOESEL) caractérisant une longueur ($L_{ES}$) d'une première section (50) d'une première ligne de télécommunication (13), une deuxième section (52) de la première ligne de télécommunication (13) étant disposée le long d'au moins une deuxième ligne de télécommunication (55) de sorte que la première ligne de télécommunication (13) provoque une diaphonie (60) au niveau de la deuxième ligne de télécommunication (55), le dispositif (25, 43, 47) est conçu pour

- acquérir (83) des données de mesure du bruit sur la ligne (QLN) caractérisant un bruit sur la ligne au repos de la deuxième ligne de télécommunication (55) ; et
- déterminer (85) la valeur de longueur ($L_{ES}$) en fonction des données de mesure du bruit sur la ligne (QLN) ;

**caractérisé en ce que** la deuxième ligne de télécommunication (55) est soumise à une diaphonie provoquée par au moins une troisième ligne de télécommunication (56) disposée le long de la deuxième ligne de télécommunication (55), le dispositif (25, 43, 47) permettant de sélectionner (75) une densité de signal de puissance de transmission d'au moins un signal de données transmis sur la troisième ligne de télécommunication (56) de sorte que la diaphonie provoquée par la première ligne de télécommunication (13) domine la diaphonie provoquée par la troisième ligne de télécommunication (56).

**12.** Dispositif (25, 43, 47) selon la revendication 11, le dispositif (25, 43, 47) étant conçu, de préférence programmé, pour exécuter un procédé (71) selon l'une des revendications 1 à 10.

**13.** Noeud de surveillance (39) pouvant être connecté à un réseau d'accès (11), le réseau (11) comprenant au moins un noeud d'accès (45), le noeud de surveillance (39) comprenant un dispositif (25, 43, 47) selon la revendication 13.

**14.** Produit de programme informatique, de préférence un support de stockage lisible par un ordinateur (29), comprenant un programme informatique qui est programmé pour exécuter un procédé (71) selon l'une des revendications 1 à 10 lorsqu'il est exécuté sur un ordinateur.

Fig. 1

**Fig. 2**

71

73

DPBOESEL > $L_{ES}$ — 77

75

$\Delta PSD$ — 81

QLN — 83

101

$L_{CS}$, $Ndist_{RT}$ — 87

85

$L_{ES}$, $Ndist_{CO}$ — 91

DPBOESEL := $f(L_{ES})$ — 95

97

99

**Fig. 3**

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080151742 A1
- EP 2348644 A1
- WO 2010022174 A1